(19) Europäisches Patentamt
European Patent Office
Office européen des brevets

(11) Veröffentlichungsnummer: **0 156 970**
**A2**

(12) # EUROPÄISCHE PATENTANMELDUNG

(21) Anmeldenummer: **84114565.9**

(22) Anmeldetag: **03.12.84**

(51) Int. Cl.[4]: **C 08 L 83/04,** D 06 M 15/643, C 08 J 3/02

(30) Priorität: **01.12.83 DE 3343575**

(43) Veröffentlichungstag der Anmeldung: **09.10.85 Patentblatt 85/41**

(84) Benannte Vertragsstaaten: **BE DE FR GB IT NL**

(71) Anmelder: **WACKER-CHEMIE GMBH, Prinzregentenstrasse 22, D-8000 München 22 (DE)**

(72) Erfinder: **Huhn, Karl, Dr. Dipl.-Chem., Bachstrasse 16, D-8263 Burghausen (DE)**
Erfinder: **Ullrich, Kurt, Bonifaz-Huber-Strasse 10, D-8263 Burghausen (DE)**

(54) **Verfahren zur Herstellung von wässrigen Emulsionen.**

(57) Bei der Herstellung von wäßrigen Emulsionen für die Imprägnierung von organischen Fasern, wobei für die Herstellung dieser Emulsionen zusätzlich zu Wasser und Dispergiermittel als wesentliche Stoffe

(1) in den endständigen Einheiten je eine Si-gebundene Hydroxylgruppe aufweisendes Diorganopolysiloxan, dessen organische Reste frei von basischem Stickstoff sind,

(2) Organopolysiloxan, das zusätzlich zu Diorganosiloxaneinheiten, worin die beiden organischen Reste einwertige Kohlenwasserstoffreste sind, je Molekül mindestens zwei einwertige SiC-gebundene organische Reste mit basischem Stickstoff enthält,

(3) Organosilan mit mindestens zwei SiOC-gebundenen, einwertigen aus Kohlenstoff, Wasserstoff und gegebenenfalls Sauerstoff aufgebauten organischen Resten oder Teilhydrolysat von derartigem Silan oder sowohl derartiges Silan als auch Teilhydrolysat von derartigem Silan und

(4) Kondensationskatalysator eingesetzt werden, wird erfindungsgemäß

Bestandteil (2) in Mengen von 5 bis 50 Gewichtsprozent, bezogen auf das Gewicht von Bestandteil (1),

Bestandteil (3) in Mengen von 2 bis 6 Gewichtsprozent, bezogen auf das Gesamtgewicht von Bestandteil (1) und (2),

Bestandteil (4) in Mengen von 0,2 bis 1 Gewichtsprozent, bezogen auf das Gesamtgewicht von Bestandteil (1) und (2),

eingesetzt, sowie Bestandteil (3) mit einer wäßrigen Emulsion von Bestandteil (1) und (2) vermischt und erst dann das so erhaltene Gemisch mit Bestandteil (4) vermischt.

EP 0 156 970 A2

W A C K E R - C H E M I E
G M B H

München, den 26. Oktober 1983
Dr.Ru/rei
0156970

Wa 8232-S

# Verfahren zur Herstellung von wäßrigen Emulsionen

Aus US 3 876 459, ausgegeben 8. April 1975, P. M. Burrill, Dow Corning Limited, ist es bereits bekannt, organische Fasern mit einer Zusammensetzung zu imprägnieren, die durch Vermischen von

(A) in den endständigen Einheiten je eine Si-gebundener Hydroxylgruppe aufweisendem Diorganopolysiloxan, dessen organische Reste frei von basischem Stickstoff sind, mit

(B) Organosilan mit basischen Stickstoff enthaltendem organischen Rest oder Teilhydrolysat von solchem Organosilan bzw. Umsetzungsprodukt eines Teils von Bestandteil (A) mit derartigem Organosilan oder Teilhydrolysat von solchem Silan und gegebenenfalls

(C) Silan mit 3 oder 4 SiOC-gebundenen, Alkyl- oder Alkoxyalkylenresten sowie

(D) Kondensationskatalysator

hergestellt worden ist. Aus dieser Druckschrift ist es auch bekannt, derartige Zusammensetzungen in Form von wäßrigen Emulsionen einzusetzen. Gemäß US 4 137 179, ausgegeben 30. Januar 1979, G. Koerner et al., Th. Goldschmidt AG, sind jedoch derartige Emulsionen nicht beständig.

Es bestand somit die Aufgabe, wäßrige Emulsionen bereitzustellen, die aus den gleichen Bestandteilen wie den oben genannten Bestandteilen (A) bis (D) hergestellt werden können, jedoch in besonders hohem Ausmaß beständig sind und den damit behandelten Fasern angenehmen Griff und hohe Sprungelastizität verleihen, wobei diese den Fasern verliehenen Eigenschaften auch beim Reinigen derFasern mit Wasser oder organischem Lösungsmittel erhalten bleiben. Diese Aufgabe wird durch die Erfindung gelöst.

Gegenstand der Erfindung ist ein Verfahren zur Herstellung von wäßrigen Emulsionen für die Imprägnierung von organischen Fasern, wobei für die Herstellung dieser Emulsionen zusätzlich zu Wasser und Dispergiermittel als wesentliche Stoffe

(1) in den endständigen Einheiten je eine Si-gebundene Hydroxylgruppe aufweisendes Diorganopolysiloxan, dessen organische Reste frei von basischem Stickstoff sind,

(2) Organopolysiloxan, das zusätzlich zu Diorganosiloxaneinheiten, worin die beiden organischen Reste einwertige Kohlenwasserstoffreste sind, je Molekül mindestens zwei einwertige SiC-gebundene organische Reste mit basischem Stickstoff enthält,

(3) Organosilan mit mindestens zwei SiOC-gebundenen, einwertigen aus Kohlenstoff, Wasserstoff und gegebenenfalls Sauerstoff aufgebauten organischen Resten oder Teilhydrolysat von derartigem Silan oder sowohl derartiges Silan als auch Teilhydrolysat von derartigem Silan und

(4) Kondensationskatalysator
eingesetzt werden, dadurch gekennzeichnet, daß Bestandteil (2) in Mengen von 5 bis 50 Gewichtsprozent, bezogen auf das Gewicht von Bestandteil (1), Bestandteil (3) in Mengen von 2 bis 6 Gewichtsprozent, bezogen auf das Gesamtgewicht von Bestandteil (1) und (2), und
Bestandteil (4) in Mengen 0,2 bis 1 Gewichtsprozent, bezogen auf das Gesamtgewicht von Bestandteil (1) und (2),
eingesetzt sowie Bestandteil (3) mit einer wäßrigen Emulsion von Bestandteil (1) und (2) vermischt und erst dann das so erhaltene Gemisch mit Bestandteil (4) vermischt wird.

Die vorstehend angegebenen Mengenbereiche sind entscheidend. Werden bei Bestandteil (2) bis (4) die unteren Grenzen der Mengenbereiche unterschritten, so wird den Fasern kein genügend angenehmer Griff und nicht befriedigend hohe Sprungelastizität, wobei diese den Fasern verliehenen Eigenschaften auch beim Reinigen der Fasern mit Wasser oder organischem Lösungsmittel erhalten bleiben, verliehen. Werden bei Bestandteil (3) und (4) die oberen Grenzen der Mengenbereiche überschritten, so werden keine sehr beständigen Emulsionen erhalten. Werden mehr als 50 Gewichtsprozent, bezogen auf das Gewicht von Bestandteil (1), Bestandteil (2) verwendet, so ist dies unwirtschaftlich und ergibt keine zusätzlichen Vorteile gegegenüber der Verwendung geringerer Mengen.

Als in den endständigen Einheiten je eine Si-gebundene Hydroxylgruppe aufweisende Diorganopolysiloxane (1), deren organische Reste frei von basischem Stickstoff sind, können auch bei dem erfindungsgemäßen Verfahren beliebige, in den endständigen Einheiten je eine Si-gebundene Hydroxylgruppe aufweisende Diorganopolysiloxane, deren organische Reste frei von basischem Stickstoff sind, verwendet werden, die auch bisher zur Herstellung von wäßrigen Emulsionen für die Imprägnierung von organischen oder anorganischen Fasern hergestellt werden konnten. Bevorzugt sind solche der allgemeinen Formel

$$HOSiR_2O(SiR_2O)_nH \quad ,$$

worin R gleiche oder verschiedene einwertige Kohlenwasserstoff, reste bedeutet und n eine ganze Zahl mit einem solchen Wert ist, daß die durchschnittliche Viskosität dieser Diorganopolysiloxane (1) 500 bis 50 000 mPa·s bei 25°C beträgt. Vorzugsweise enthalten die Kohlenwasserstoffreste R 1 bis 20 Kohlenstoffatome je Rest. Beispiele für Kohlenwasserstoffreste, die in den Diorganosiloxaneinheiten vom Organopolsiloxan (1) vorliegen können, sind Alkylreste, wie der Methyl-, Ethyl-, n-Propyl- und Isopropylrest sowie Butyl-, Octyl-, Tetradecyl- und Octadecylreste; aliphatische Reste mit aliphatischer Mehrfachbindung, wie der Vinyl- und Allylrest sowie Hexenylreste; cycloaliphatische Kohlenwasserstoffreste, wie der Cyclopentyl- und Cyclohexylrest; aromatische Kohlenwasserstoffreste, wie der Phenylrest sowie Naphthylreste; Alkarylreste, wie Tolylreste; und Aralkylreste, wie der Benzylrest. Insbesondere wegen der leichteren Zugänglichkeit bestehen vorzugsweise mindestens 80 % der Anzahl der Kohlenwasserstoffreste im Diorganopolysiloxan (1) aus Methylresten.

Es kann eine Art von Diorganopolysiloxan (1) verwendet werden. Es kann aber auch ein Gemisch aus mindestens zwei verschiedenen Arten von Diorganopolysiloxan (1) bei dem erfindungsgemäßen Verfahren eingesetzt werden.

Die Diorganopolysiloxane (1) können solche sein, die durch zumindest im wesentlichen in Abwesenheit von Wasser erfolgte Polymerisation erzeugt wurden. Sie können aber auch solche sein, die durch Polymerisation in wäßriger Emulsion hergestellt wurden.

Vorzugsweise beträgt die Viskosität vom Organopolysiloxan (1) 2000 bis 10 000 mPa•s bei 25°C.
Die Diorganosiloxaneinheiten, worin die beiden organischen Reste Kohlenwasserstoffreste sind, im Organopolysiloxan (2), das zusätzlich zu Diorganosiloxaneinheiten, worin die beiden organischen Reste Kohlenwasserstoffreste sind, je Molekül mindestens zwei einwertige SiC-gebundene organische Reste mit basischem Stickstoff enthält, können durch die allgemeine Formel

$$R_2SiO$$

wiedergegeben werden, wobei R die oben dafür angegebene Bedeutung hat. Alle Beispiele und Ausführungen über die Kohlenwasserstoffreste im Organopolysiloxan (1) gelten auch für die Kohlenwasserstoffreste im Organopolysiloxan (2).

Die Siloxaneinheiten, in denen die SiC-gebundenen organischen Reste mit basischem Stickstoff vom Organopolysiloxan (2) vorliegen, sind vorzugsweise solche, die durch die allgemeine Formel

$$R^2_2NR^1R_b(R^3O)_aSiO_{\frac{3-a-b}{2}}$$

wiedergegeben werden könnte. In dieser Formel hat R die oben dafür angegebene Bedeutung, $R^1$ bedeutet einen zweiwertigen Kohlenwasserstoffrest, $R^2$ Wasserstoff oder gleiche oder verschiedene Alkyl- oder Aminoalkylreste und $R^3$ gleiche oder verschiedene Alkylreste mit 1 bis 4 Kohlenstoffatomen je Rest; a ist 0, 1 oder 2, b ist 0, 1 oder 2 und die Summe von a + b ist höchstens 2.

Beispiele für zweiwertige Kohlenwasserstoffreste $R^1$ sind der Methylen- und Ethylenrest sowie Propylen-, Butylen-, Cyclohexylen-, Octadecylen-, Phenylen- und Butenylenreste. Insbesondere wegen der leichteren Zugänglichkeit ist der n-Propylenrest bevorzugt.

Die Beispiele für Alkylreste R gelten im vollen Umfang auch für Alkylreste $R^2$.

Beispiele für Aminoalkylreste $R^2$ sind solche der Formeln

$H_2N(CH_2)_3$ -

$H_2N(CH_2)_2NH(CH_2)_3$ -

$H_2N(CH_2)_2$ -

$(H_3C)_2N(CH_2)_2$ -

$H_2N(CH_2)_5$ -

$H(NHCH_2CH_2)_3$ - und

$C_4H_9NHCH_2CH_2NHCH_2CH_2$ -

Vorzugsweise ist mindestens ein $R^2$ Wasserstoff.

Beispiele für Alkylreste $R^3$ sind insbesondere der Methyl-,

Ethyl- und Isopropylrest.

Vorzugsweise besitzen die bei dem erfindungsgemäßen Verfahren eingesetzten Organopolysiloxane eine Viskosität von 20 bis 20 000 mPa•s bei 25°C.

Es kann eine Art von Organopolysiloxan (2) eingesetzt werden. Es kann aber auch ein Gemisch aus mindestens zwei verschiedenen Arten von Organopolysiloxan (2) eingesetzt werden.

Als Organosilane (3) mit mindestens zwei SiOC-gebundenen, einwertigen aus Kohlenstoff, Wasserstoff und gegebenenfalls Sauerstoff aufgebauten organischen Resten sind solche der allgemeinen Formel

$$R^4_aSi\left[(OCH_2CR^5H)_mOX\right]_{4-a}$$

bevorzugt. In dieser Formel ist $R^4$ ein durch mindestens eine Amino- bzw. Iminogruppe substituierter Alkylrest, wie die oben angegebenen Beispiele für Aminoalkylreste $R^2$, oder $R^4$ hat die gleiche Bedeutung wie R, $R^5$ bedeutet Wasserstoff oder gleiche oder verschiedene Alkylreste mit 1 bis 4 Kohlenstoffatomen je Rest, vorzugsweise Wasserstoff, X bedeutet Wasserstoff oder gleiche oder verschiedene Alkylreste mit 1 bis 4 Kohlenstoffatomen je Rest oder gleiche oder verschiedene Acylreste mit 1 bis 5 Kohlenstoffatomen, vorzugsweise höchstens 3 Kohlenstoffatomen, je Rest, a ist 0, 1 oder 2 und m 0 oder eine ganze Zahl im Wert von 1 bis 30, mit der Maßgabe, daß wenn X Wasserstoff oder ein Acylrest ist, m mindestens 1 ist.

Einzelne Beispiele für derartige Silane bzw. Teilhydrolysate derartiger Silane sind Methyltrimethoxysilan, Methyltriethoxysilan, das Ethoxypolysiloxan, das unter der Bezeichnung "Äthylsilikat 40" oder "Ethylsilikat 40" bekannt ist und 40 Gewichtsprozent $SiO_2$ enthält, sowie die Silane der Formeln

$H_2N(CH_2)_2HN(CH_2)_3Si(OCH_3)_3$

$CH_3Si(OCH_2CH_2OCH_3)_3$

$CH_3O(CH_2CH_2O)_6(CH_2)_3Si(OCH_3)_3$

$H_2N(CH_2)_2NH(CH_2)_3(CH_3)Si(OCH_3)_2$ .

Es kann eine Art von Silan (3) bzw. Teilhydrolysat aus derartigem Silan verwendet werden. Es kann aber auch ein Gemisch aus mindestens zwei verschiedenen Arten von derartigem Silan bzw. von Teilhydrolysat aus derartigem Silan verwendet werden.

Als Kondensationskatalysatoren (4) können im Rahmen des erfindungsgemäßen Verfahrens beliebige Katalysatoren für die Kondensation von Si-gebundenen kondensationsfähigen Gruppen eingesetzt werden, die auch bisher in wäßriger Emulsion eingesetzt werden konnten. Beispiele für solche Katalysatoren sind insbesondere Carbonsäuresalze von Zinn oder Zink, wobei an Zinn Kohlenwasserstoffreste direkt gebunden sein können, wie Di-n-butylzinndilaurat, Zinnoctoate, Di-2-ethylhexylzinndilaurat, Di-n-butylzinndi-2-ethylhexoat, Di-2-ethylhexylzinndi-2-ethylhexoat und Zinkoctoate. Weitere Beispiele für Kondensationskatalysatoren (4) sind Alkoxytitanate, wie Butyltitanate, und Triethanolamintitanate, sowie Zirkoniumverbindungen.

Es kann eine Art von Kondensationskatalysator (4) verwendet werden. Es kann aber auch ein Gemisch aus mindestens zwei verschiedenen Arten von Kondensationskatalysator (4), z.B. ein Gemisch aus Di-n-butylzinndilaurat und Triethanolamintitanat verwendet werden.
Als Dispergiermittel können im Rahmen des erfindungsgemäßen Verfahrens alle Dispergiermittel eingesetzt werden, mit deren Hilfe auch bisher wäßrige Emulsionen von Organopolysiloxanen für die Imprägnierung von organischen Fasern hergestellt werden konnten.

Bevorzugt als Dispergiermittel sind nicht-ionogene Emulgatoren, wie Polyglykolether von Alkanolen oder Phenol oder Alkylphenolen, wie Nonylphenolpolyglykolether, tert.-Butylphenolpolyglykolether, Polyoxyethylensorbitanhexastearat, Polyoxyethylenisotridecylether, Trimethylnonylether von Polyethylenglykol, das 6 bis 14 Ethylenoxydeinheiten je Molekül enthält, Polyoxyethylensorbitanoleat mit einer Verseifungszahl von 102 bis 108 und einer Hydroxylzahl von 25 bis 35 und Dimethylpolysiloxan-Ethylenoxyd-Blockmischpolymerisate.

Weitere Beispiele für bei dem erfindungsgemäßen Verfahren verwendbare Dispergiermittel sind anionische Emulgatoren wie Alkylbenzolsulfonate und Natriumalkylarylpolyethylenglykolsulfonate.

Ebenfalls weitere Beispiele für bei dem erfindungsgemäßen Verfahren verwendbaren Dispergiermittel sind kationische Emulgatoren, wie Tetraalkylammoniumchloride.

Vorzugsweise werden die Dispergiermittel bei dem erfindungsgemäßen Verfahren in Mengen von 3 bis 20 Gewichtsprozent, insbesondere 5 bis 10 Gewichtsprozent, jeweils bezogen auf das Gesamtgewicht der Bestandteile (1) bis (4), eingesetzt.

Für Lagerung und Transport enthalten die erfindungsgemäß hergestellten Emulsionen vorzugsweise 35 bis 80 Gewichtsprozent, insbesondere 45 bis 60 Gewichtsprozent, jeweils bezogen auf das Gesamtgewicht der jeweiligen Emulsion, Wasser. Niedrigere Gehalte an anderen Stoffen als Wasser können zu nicht befriedigender Beständigkeit der Emulsionen führen. Höhere Gehalte an anderen Stoffen als Wasser ergeben Emulsionen, die wegen ihrer hohen Viskosität nur schlecht handhabbar sind.

Zur endgültigen Anwendung für die Imprägnierung von organischen Fasern werden die erfindungsgemäß hergestellten Emulsionen vorzugsweise auf einen Gehalt von 95 bis 99,5 Gewichtsprozent Wasser, bezogen auf das Gesamtgewicht der jeweiligen Emulsion, verdünnt.

Für die Herstellung der Emulsionen können beliebige, für die Herstellung von wäßrigen Emulsionen geeignete Geräte, wie schnellaufende Rührer verwendet werden.

Bei der Herstellung der wäßrigen Emulsion von Bestandteil (1) und (2), mit der zunächst Bestandteil (3) und dann erst Bestandteil (4) vermischt wird, können Bestandteil (1) und (2) getrennt oder gemeinsam im Wasser emulgiert werden. Vorzugsweise wird Bestandteil (3) in Wasser gelöst bzw. emulgiert, bevor er mit der wäßrigen Emulsion von Bestandteil (1) und (2) vermischt wird. Ebenso wird bzw. werden vorzugsweise der Kondensationskatalysator (4) bzw. die Kondensationskatalysatoren (4) in Wasser gelöst bzw. dispergiert, bevor er bzw. sie mit dem im Wasser verteilten Gemisch der Bestandteile (1), (2) und (3) vermischt wird bzw. werden.

Bei der endgültigen Verwendung der erfindungsgemäß hergestellten Emulsionen können gegebenenfalls weitere Stoffe, insbesondere weitere Textilausrüstungsmittel, mitverwendet werden. Derartige weitere Stoffe sind beispielsweise sogenannte "Knitterfrei-Ausrüstungen", wie Dimethyloldihydroxyethylenharnstoff (DMDHEU) im Gemisch mit Zinknitrat, insbesondere wenn die zu imprägnierenden Fasern solche aus Cellulose oder Baumwolle sind oder Fasergemische sind, die Cellulose- oder Baumwollfasern enthalten.

Die erfindungsgemäß hergestellten Emulsionen sind bei Raumtemperatur mindestens 6 Monate beständig. Bei Entfernung des Wassers vernetzen sie zu einem elastischen Film. Ein derartiger Film, der aus einer frisch bereiteten Emulsion erzeugt wurde, unterscheidet sich zumindest im wesentlichen nicht von einem Film, der aus einer 6 Monate bei Raumtemperatur gelagerten Emulsion hergestellt wurde.

Mit den erfindungsgemäß hergestellten Emulsionen können alle organischen Fasern in Form von Fäden, Garnen, Vliesen, Matten, gewebten, gewirkten oder gestrickten Textilien imprägniert werden, die auch bisher mit Organosiliciumverbindungen aus wäßriger Emulsion imprägniert werden konnten. Die Fasern können solche natürlicher oder synthetischer Herkunft sein. Beispiele für Fasern, die mit den erfindungsgemäß hergestellten Emulsionen imprägniert werden können, sind solche aus Keratin, insbesondere Wolle, Baumwolle, Rayon, Hanf, natürlicher Seide, Polypropylen, Polyethylen, Polyester, Polyurethan, Polyamid, Celluloseacetat und Gemische aus mindestens zwei solcher Fasern. Die Textilien können in Form von Stoffbahnen oder von Kleidungsstücken bzw. Teilen von Kleidungsstücken vorliegen.

Bei Keratin, insbesondere Wolle, kann durch Imprägnierung mit einer erfindungsgemäß hergestellten Emulsion,vor allem, wenn das Keratin mit Chlor vorbehandelt, gespült und neutralisiert wurde, das Schrumpfen durch Verfilzen verhindert werden.

Das Auftragen der erfindungsgemäß hergestellten Emulsionen auf die zu imprägnierenden Fasern kann in beliebiger für die Imprägnierung von organischen Fasern mit flüssigen Stoffen geeigneter und vielfach bekannter Weise erfolgen, z.B. durch Tauchen, Streichen, Gießen, Sprühen, Aufwalzen, Drucken, Messer- oder Rakelbeschichtung, oder Klotzen, erfolgen.

Die Vernetzung vom vernetzbaren Organopolysiloxan auf der Faser erfolgt nach Verdampfen des Wassers. Dieses Verdampfen wird vorzugsweise bei 50° bis 180°C durchgeführt.

Vorzugsweise beträgt die Gewichtszunahme der Fasern, die mit den erfindungsgemäß hergestellten Emulsionen imprägniert wurden, nach dem Verdampfen des Wassers 0,1 bis 20 Gewichtsprozent, insbesondere 0,5 bis 3 Gewichtsprozent, jeweils bezogen auf das Gewicht der jeweiligen Faser vor der Imprägnierung.

In den folgenden Beispielen beziehen sich alle Angaben von

Teilen und Prozentsätzen auf das Gewicht, soweit nichts anderes angegeben ist.

Als Gerät für die Herstellung der Emulsionen wird bei den folgenden Beispielen jeweils ein schnellaufender Rührer verwendet.

Beispiel 1

a) 35 Teile eines in den endständigen Einheiten je eine Si-gebundene Hydroxylgruppe aufweisenden Dimethylpolysiloxans mit einer Viskosität von 6000 mPa·s bei 25°C werden zunächst mit
4 Teilen Nonylphenolpolyglykolether, hergestellt durch Umsetzung von Nonylphenol (1 Mol) mit Ethylenoxyd (15 Mol), und
4 Teilen Wasser vermischt.

Aus der so erhaltenen Mischung wird durch Zugabe von 57 Teilen Wasser eine Emulsion bereitet.

b) Die vorstehend beschriebene Arbeitsweise wird wiederholt mit der Abänderung, daß die 35 Teile des in den endständigen Einheiten je eine Si-gebundene Hydroxylgruppe aufweisenden Dimethylpolysiloxans durch 35 Teile eines Umsetzungsprodukts von in den endständigen Einheiten je eine Si-gebundene Hydroxylgruppe aufweisendem Dimethylpolysiloxan mit einer Viskosität von 100 mPa·s bei 25°C mit dem Silan der Formel

$$H_2N(CH_2)_2NH(CH_2)_3Si(OCH_3)_3$$

ersetzt werden, wobei dieses Umsetzungsprodukt eine Aminzahl (Anzahl der ml 1n-HCl, die zum Neutralisieren von 1g erforderlich ist) von 1,2 und eine Viskosität von 65 mPa·s bei 25°C hat.

c) 25 Teile Di-2-ethylhexylzinndilaurat werden zunächst mit
3 Teilen tert.-Butylphenolpolyglykolether, hergestellt

durch Umsetzung von tert.-Butylphenol (1 Mol) mit Ethylenoxyd (13 Mol) und

3 Teilen Wasser vermischt. Aus der so erhaltenen Mischung wird durch Zugabe von 69 Teilen Wasser eine Emulsion bereitet.

d) 90 Teile der Emulsion, deren Herstellung oben unter a) beschrieben wurde, werden mit

4,5 Teilen der Emulsion, deren Herstellung oben unter b) beschrieben wurde, vermischt. Zu der so erhaltenen wäßrigen Emulsion von Bestandteil (1) und (2) wird ein Bestandteil (3) in Form von

5 Teilen einer Lösung, die durch Zugabe von 40 Teilen des Silans der Formel

$$CH_3Si(OCH_2CH_2OCH_3)_3$$

zu 60 Teilen Wasser bereitet wurde, gegeben.

In das so erhaltene Gemisch werden als Bestandteil (4) 0,5 Teile der Emulsion, deren Herstellung oben unter c) beschrieben wurde, eingemischt.

Die so erhaltene Emulsion ist auch nach 6 Monaten Lagerung bei 40°C in einem geschlossenen Gefäß beständig.

In eine wäßrige Emulsion, die durch Vermischen von 30 Teilen der wie vorstehend beschrieben hergestellten Emulsion aus Bestandteilen (1) bis (4) mit 970 Volumteilen Wasser hergestellt wurde, wird gewirkter Polyester getaucht. Dann wird dieser Polyester auf 100% Flüssigkeitsaufnahme abgequetscht und schließlich 10 Minuten auf 150°C erwärmt. Der so behandelte Polyester besitzt einen weichen angenehmen und elastischen Griff, der auch nach 5 Feinwäschen bei 30°C in einer Haushaltwaschmaschine oder nach 5-maliger 20-Minuten-Behandlung mit Perchlorethylen, wie sie beim Chemischen Reinigen durchgeführt wird, noch vorhanden ist.

Beispiel 2

e) 30 Teile einer 80 %-igen Lösung von Zirkoniumoctoat in Benzin (Zirkoniumgehalt: 18 %) werden zunächst mit
3 Teilen des in Beispiel 1 unter c) näher beschriebenen tert.-Butylphenolpolyglykolethers und
3 Teilen Wasser vermischt. Aus der so erhaltenen Mischung wird durch Zugabe von 64 Teilen Wasser eine Emulsion bereitet.

f) 85 Teile der Emulsion, deren Herstellung in Beispiel 1 unter a) beschrieben wurde, werden mit
10 Teilen der Emulsion, deren Herstellung in Beispiel 1 unter b) beschrieben wurde, vermischt. Zu der so erhaltenen wäßrigen Emulsion von Bestandteil (1) und (2) wird ein Bestandteil (3) in Form von
4 Teilen einer Lösung, die durch Zugabe von 40 Teilen des Silans der Formel

$$H_2N(CH_2)_2NH(CH_2)_3Si(OCH_3)_3$$

zu 60 Teilen Wasser bereitet wurde,
gegeben. In das so erhaltene Gemisch werden als Bestandteil (4)
1 Teil der Emulsion, deren Herstellung oben unter e) beschrieben wurde, eingemischt.

Die so erhaltene Emulsion ist auch nach 6 Monaten Lagerung bei 40°C in einem geschlossenen Gefäß beständig.

Beispiel 3

g) Die in Beispiel 1 unter a) beschriebene Arbeitsweise wird wiederholt, mit der Abänderung, daß die 35 Teile des in den endständigen Einheiten je eine Si-gebundene Hydroxylgruppe aufweisenden Dimethylpolysiloxans durch 35 Teile eines Umsetzungsprodukts von in den endständigen Einheiten je eine Si-gebundene Hydroxylgruppe aufweisendem Dimethylpolysiloxan mit einer Viskosität von 100 mPa·s bei 25°C mit dem Silan der Formel

$$H_2N(CH_2)_2NH(CH_2)_3(CH_3)Si(OCH_3)_2$$

ersetzt werden, wobei dieses Umsetzungsprodukt eine Aminzahl von 0,1 und eine Viskosität von 5000 mPa s bei 25°C hat.

h) 50 Teile der Emulsion, deren Herstellung in Beispiel 1 unter a) beschrieben wurde, werden mit
10 Teilen der Emulsion, deren Herstellung vorstehend unter g) beschrieben wurde,

vermischt. Zu der so erhaltenen wäßrigen Emulsion von Bestandteil (1) und (2) wird ein Bestandteil (3) in Form von
4 Teilen der Lösung, die durch Zugabe von 40 Teilen des Silans der Formel

$CH_3Si(OCH_2CH_2OCH_3)_3$

zu 60 Teilen Wasser bereitet wurde, gegeben. In das so erhaltene Gemisch werden als Bestandteil (4)
1 Teil der Emulsion, deren Herstellung oben unter e) beschrieben wurde, eingemischt.

Die so erhaltene Emulsion ist auch nach 6 Monaten Lagerung bei 40°C in einem geschlossenen Gefäß beständig.

In eine wäßrige Emulsion, die durch Vermischen von 40 Teilen der wie vorstehend beschrieben hergestellten Emulsion aus den Bestandteilen (1) bis (4) mit 100 Teilen einer 45 %-igen wäßrigen Lösung von DMDHEU, 20 Teilen Zinknitrat und 860 Teilen Wasser hergestellt wurde, wird ein Gewebe, das zu 100 % aus Baumwolle besteht, getaucht. Dann wird das Gewebe auf 100 % Flüssigkeitsaufnahme abgequetscht und schließlich 10 Minuten auf 150°C erwärmt. Das so behandelte Gewebe besitzt einen weichen angenehmen und elastischen Griff, der auch nach 5 Feinwäschen bei 30°C in einer Haushaltwaschmaschine oder nach 5-maliger 20-Minuten-Behandlung mit Perchlorethylen, wie sie beim Chemischen Reinigen durchgeführt wird, noch vorhanden ist.

Patentansprüche:

1. Verfahren zur Herstellung von wäßrigen Emulsionen für die Imprägnierung von organischen Fasern, wobei für die Herstellung dieser Emulsionen zusätzlich zu Wasser und Dispergiermittel als wesentliche Stoffe

(1) in den endständigen Einheiten je eine Si-gebundene Hydroxylgruppe aufweisendes Diorganopolysiloxan, dessen organische Reste frei von basischem Stickstoff sind,

(2) Organopolysiloxan, das zusätzlich zu Diorganosiloxaneinheiten, worin die beiden organischen Reste einwertige Kohlenwasserstoffreste sind, je Molekül mindestens zwei einwertige SiC-gebundene organische Reste mit basischem Stickstoff enthält,

(3) Organosilan mit mindestens zwei SiOC-gebundenen, einwertigen aus Kohlenstoff, Wasserstoff und gegebenenfalls Sauerstoff aufgebauten organischen Resten oder Teilhydrolysat von derartigem Silan oder sowohl derartiges Silan als auch Teilhydrolysat von derartigem Silan und

(4) Kondensationskatalysator

eingesetzt werden, dadurch gekennzeichnet, daß
Bestandteil (2) in Mengen von 5 bis 50 Gewichtsprozent, bezogen auf das Gewicht von Bestandteil (1),
Bestandteil (3) in Mengen von 2 bis 6 Gewichtsprozent, bezogen auf das Gesamtgewicht von Bestandteil (1) und (2), und
Bestandteil (4) in Mengen von 0,2 bis 1 Gewichtsprozent, bezogen auf das Gesamtgewicht von Bestandteil (1) und (2), eingesetzt, sowie Bestandteil (3) mit einer wäßrigen Emulsion von Bestandteil (1) und (2) vermischt und erst dann das so erhaltene Gemisch mit Bestandteil (4) vermischt wird.

2. Verfahren nach Anspruch 1, d a d u r c h g e k e n n z e i c h n e t, daß Bestandteil (3) in Wasser gelöst bzw. dispergiert wird, bevor er mit der wäßrigen Emulsion von Bestandteil (1) und (2) vermischt wird.

3. Verfahren nach Anspruch 1, d a d u r c h g e k e n n z e i c h n e t, daß Bestandteil (4) in Wasser gelöst bzw. dispergiert wird, bevor er mit dem in Wasser verteilten Gemisch der Bestandteile (1), (2) und (3) vermischt wird.